# FASCICULE DE BREVET EUROPEEN

(11) **EP 1 901 913 B1**
(45) Date de publication et mention de la délivrance du brevet: **04.11.2009**
(21) Numéro de dépôt: 06778833.1
(22) Date de dépôt: 07.07.2006
(51) Int. Cl.: B29C 70/86, B29C 70/34

(54) **PROCEDE DE FABRICATION DE BUTEES D'AERONEF EN MATERIAU COMPOSITE CARBONE**
VERFAHREN ZUR HERSTELLUNG VON FLUGZEUGSPERREN AUS VERBUNDMATERIAL AUS KOHLENSTOFF
METHOD FOR MAKING AIRCRAFT STOPS IN COMPOSITE CARBON MATERIAL

(30) Priorité: 08.07.2005 FR 0507295
(43) Date de publication de la demande: 26.03.2008
(73) Titulaire: LATECOERE, 31500 Toulouse (FR)
(72) Inventeur: GARRIGUES, Gilles, F-31280 Mons (FR); GONZALEZ, Manuel, F-31340 La Magdelaine sur Tarn (FR)
(74) Mandataire: Laget, Jean-Loup
(86) Numéro de dépôt international: PCT/FR2006/001660
(87) Numéro de publication internationale: WO 2007/006959

(56) Documents cités:
- WO-A-98/25817
- WO-A-03/104080
- US-A- 4 038 885
- US-A- 4 209 150
- US-A- 4 530 147
- US-A1- 2003 057 603

## Description

La présente invention est relative à un procédé de fabrication de butée d'aéronef selon le procédé de la revendicaion 1.

Les portes d'aéronefs sont constituées d'une structure apte à recevoir des mécanismes permettant de réaliser des manoeuvres d'ouverture et de fermeture. La structure de la porte est articulée autour d'une pièce appelée « bras de porte » qui est lui-même fixé à la structure du fuselage. L'appui de la porte sur le fuselage est constitué d'un système discontinu et s'effectue au travers de pièces appelées « butées » et fixées d'une part sur la porte et, d'autre part, en vis-à-vis sur le fuselage.

Il est connu que ces butées sont réalisées par des procédés d'usinage, de moulage ou de matriçage. Le document WO 98258 17 montre un procédé de fabrication de butée en matériau composite avec un insert métallique. Il est connu également que les butées de portes sont réalisées en alliages d'aluminium ou en alliages de titane. Le document US 4209150 en montre un exemple.

L'inconvénient des solutions métalliques est précisément qu'elles ne répondent pas toujours de manière optimale à la contrainte de masse minimale.

Les solutions à base de matériaux composites à partir de fibres carbone continues offrent de bien meilleures performances, mais l'inconvénient de leur application avec les procédés conventionnels, reste le prix élevé lié à leur mise en oeuvre.

Un but de l'invention est de fournir une butée d'aéronef qui allie la bonne tenue des matériaux métalliques à la légèreté du matériau composite.

Dans ce but, on utilise le procédé connu de moulage d'une pièce en matériau composite du type consistant à placer dans un moule un empilement de nappes de fibres noyées dans une matière thermodurcissable ou thermoplastique et arrangées selon des directions préférentielles desdites fibres ; puis à mettre le moule en pression.

Cependant, la mise en oeuvre de ce procédé pour la fabrication de butées de porte d'aéronef pose un certain nombre de problèmes particuliers, du fait des sollicitations que subissent de telles butées. En effet, les efforts que doivent encaisser les butées sont de l'ordre de 1,3 tonne et cela à chaque fermeture de porte, ce qui entraîne de très importants phénomènes de fatigue.

Ces problèmes seront résolus, selon l'invention, par une disposition spéciale des fibres de carbone qui permet de résister aux flexions induites par l'effort appliqué sur la vis de butée.

D'autre part, il s'avère dans la pratique, impossible de visser la vis de butée dans une pièce en carbone, d'où la nécessité de mettre en place un insert métallique ; mais la fixation de cet insert métallique dans une pièce à base de résine pose également un problème délicat à résoudre.

Le procédé selon la présente invention, apporte une solution à tous ces problèmes.

L'invention a pour objet un procédé de fabrication de butée d'aéronef comportant un insert métallique par moulage d'un matériau composite de résine et de fibres de carbone selon la revendication 1.

L'invention sera mieux comprise grâce à la description qui va suivre donnée à titre d'exemple non limitatif en référence aux dessins annexés dans lesquels :
- La figure 1 représente schématiquement une vue de dessus d'une butée de porte d'aéronef.
- La figure 2 représente schématiquement une vue en perspective de la butée de la figure 1, la vis de butée ayant été enlevée.
- La figure 3 représente schématiquement une vue du drapage de nappes de carbone dans une pièce à deux volets, correspondant à l'étape 1 d'un procédé de fabrication selon l'invention.
- La figure 4 représente schématiquement une vue illustrant l'étape 2 d'un procédé de fabrication selon l'invention.
- La figure 5 représente schématiquement une vue illustrant le début de l'étape 3 d'un procédé de fabrication selon l'invention.
- La figure 6 représente schématiquement une vue illustrant la fin l'étape 3 d'un procédé de fabrication selon l'invention
- La figure 7 représente schématiquement une vue illustrant l'étape 4 d'un procédé de fabrication selon l'invention
- La figure 8 représente schématiquement une vue illustrant l'étape 5 d'un procédé de fabrication selon l'invention
- La figure 9 représente schématiquement une vue illustrant le début de l'étape 6 d'un procédé de fabrication selon l'invention
- La figure 10 représente schématiquement une vue illustrant la fin de l'étape 6 d'un procédé de fabrication selon l'invention

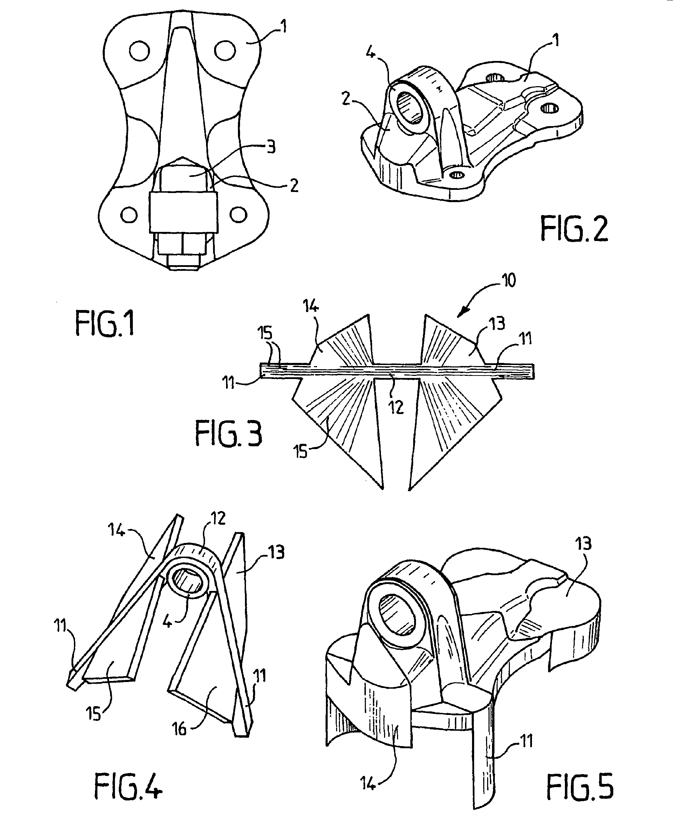

Les figures 1 et 2, représentent une butée de porte d'aéronef qui comporte une embase 1 munie d'une potence en équerre 2 portant une vis de butée 3. La vis de butée 3 a été enlevée sur la figure 2 de façon à faire apparaître une bague métallique 4.

En effet, la butée étant en matériau composite, il n'est pas possible, compte tenu de l'importance des efforts à encaisser, de visser la vis de butée dans une matière plastique : il faut donc mettre en place un insert métallique, par exemple une bague métallique 4.

Et il faut que cette bague métallique 4 soit très fermement ancrée dans la masse de la potence 2. Dans ce but, comme cela sera expliqué de façon détaillée, cette bague 4 a la forme d'un insert muni d'au moins deux épaulements : un à chaque extrémité.

La figure 3, représente la première étape de la mise en oeuvre du procédé.

Dans cette étape, on réalise à plat par drapage de plusieurs couches de nappes de carbone une pièce 10 ayant la forme représentée à la figure 3 comportant une partie rectiligne 11 et deux volets latéraux 13 et 14 séparés par une partie médiane 12. Des nappes de carbone sont disposées de façon rectiligne dans la masse de la partie rectiligne 11 de la pièce 10, et orientées de façon oblique dans des volets latéraux 13, 14, 15, 16. La longueur de la portion médiane 12 de la partie rectiligne 11 est égale à la distance séparant les deux épaulements de l'insert 4.

La pièce 10 est réalisée par drapage d'une première pièce comportant les parties représentées par des segments rayonnants et d'une deuxième pièce de surface plus importante dont le contour correspond au contour extérieur de la pièce 10. Les nappes de carbone sont réalisées par superposition de plis d'environ 12mm de large orientés suivant les angles représentés à la figure 3.

La figure 4 représente l'étape suivante de la mise en oeuvre du procédé (étape 2).

On voit sur cette figure, que la partie médiane 12 de la partie rectiligne 11 de la pièce 10 réalisée par drapage de nappes de carbone pré imprégnées de résine, est mise en place dans la gorge ménagée entre les deux épaulements de l'insert 4.

Après cette mise en place, la pièce 10 est cintrée et formée autour de l'insert métallique 4, selon une conformation en V. Les volets latéraux 13 et 14 sont destinés à être rabattus l'un sur l'autre, tandis que les volets avant 15 et 16 sont destinés à être rabattus sous la bague métallique 4 pour constituer un support inférieur entourant la partie de la bague métallique 4 diamétralement opposée à la partie médiane 12. Pour permettre le cintrage des bandes constituant les extrémités de la partie rectiligne 11, un empilage en forme de bandes de longueurs comprises entre 150 et 215 mm est nécessaire.

La figure 5, représente la troisième étape après le rabattement des volets latéraux 13 à 16, dans la conformation drapée permettant la mise en place dans un outillage de cuisson. Le rabattement des pointes ou volets 13 et 14 l'un sur l'autre assure la cohésion de la partie arrière, tandis que le rabattement des parties 15 et 16 sous l'insert métallique 4 procure une cohésion maximale de l'ensemble incluant l'insert métallique 4.

Après la mise en place dans l'outillage de cuisson de la pièce représentée à la figure 5, on peut soumettre cette pièce à une pression élevée, de manière à en augmenter la résistance et la cohésion autour de l'insert métallique 4.

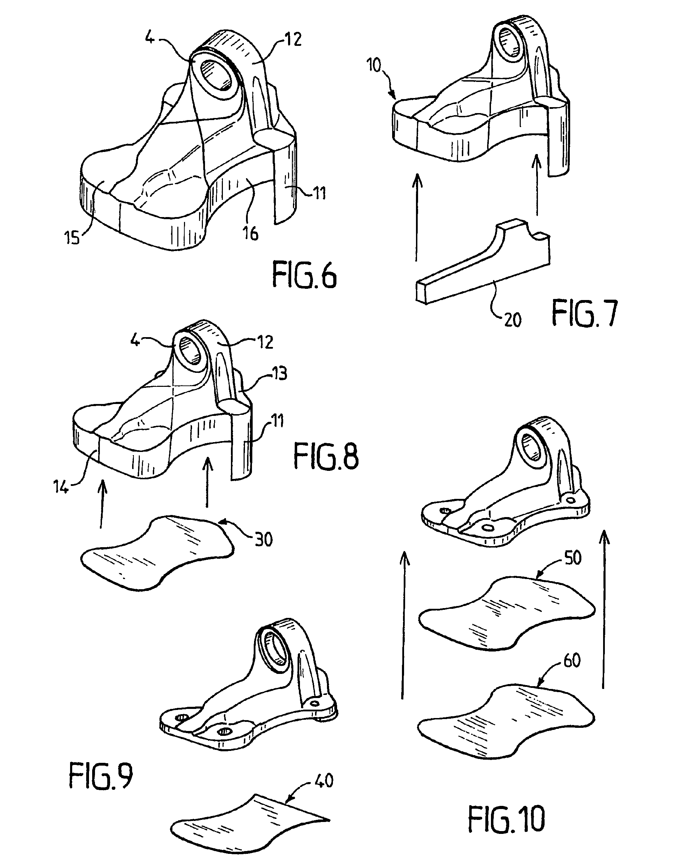

On obtient ainsi l'ensemble représenté à la figure 6, dans lequel les pointes 13 et 14 sont rabattues l'une sur l'autre et également les pointes 15 et16.

Les deux extrémités de la partie rectiligne 11 de la pièce 10 sont courbées à l'équerre vers le bas et sont gardées en réserve pour les étapes suivantes.

La figure 7 représente la quatrième étape de mise en oeuvre d'un procédé selon l'invention, dans laquelle on insère par en dessous et on fixe en place une pièce 20 de renfort destinée à être orientée suivant le plan médian longitudinal de l'ensemble représenté à la figure 6.

La figure 8 représente la cinquième étape de mise en oeuvre d'un procédé selon l'invention, dans laquelle on insère par en dessous et on fixe en place une semelle 30 de base destinée à être orientée sensiblement horizontalement afin d'obturer la partie inférieure de l'ensemble. Les extrémités de la partie rectiligne 11 de la pièce 10 sont ensuite rabattues sous la semelle 30 afin d'entourer tout l'ensemble.

Les figures 9 et 10 illustrent la sixième étape d'un procédé selon l'invention correspondant à la mise en place successive des pièces 40, 50, 60 qui constituent la semelle de la butée.

Après avoir réalisé l'ensemble décrit en référence aux figures 3 à 10, on ferme le moule sur l'ensemble ainsi réalisé, avant la mise sous pression en température. Cette septième étape de mise sous pression et de chauffage correspond ainsi à ce qui est appelé par l'homme du métier « forgeage composite ».

Grâce au procédé selon l'invention, on obtient en particulier une butée de porte ayant d'excellentes qualités de résistance mécanique, de résistance à la fatigue, tout en étant beaucoup plus légère qu'une butée métallique, ce qui est fort intéressant vu le grand nombre de butées mises en place sur un aéronef.

## Revendications

1. Procédé de fabrication de butée d'aéronef comportant un insert métallique (4) par moulage d'un matériau composite de résine et de fibres de carbone, consistant à draper un empilage de pièces réalisées (10, 20, 30, 40, 50, 60) au moyen d'une superposition de nappes de fibres de carbone pré imprégnées de résine, les nappes étant orientées de façon à assurer une cohésion maximale de l'ensemble autour de l'insert métallique (4), dans lequel l'empilage de pièces en fibre de carbone pré imprégnées de résine reçoit un insert métallique (4) destiné à recevoir une vis de butée (3), et selon lequel on exécute les étapes suivantes :
- étape 1 : on réalise à plat par nappage de plusieurs couches de nappes de carbone (15) noyées dans la résine, une pièce (10) comportant un ensemble (11) de nappes longitudinales et de nappes s'écartant latéralement en quatre volets (13, 14, 15, 16) séparés par une partie médiane (12) ;
- étape 2: on enroule ladite partie médiane (12) autour d'un insert métallique (4) muni de deux épaulements ;
- étape 3 :on installe l'insert ainsi que la pièce (10) dans l'outillage de moulage et on rabat l'un sur l'autre les volets (13) et (14) et de la même façon les volets (15) et (16) tout en réservant à un usage ultérieur les deux cotés (11) de la pièce (10);
- étapes 4 et 5 : on met en place des pièces de renfort (20) et une semelle (30), puis on rabat pour enrober ces deux pièces les deux parties (11) réservées précédemment ;
- étape 6: on finit par installer trois semelles (40, 50,60) pour obtenir l'ensemble de la butée constituée ;
- étape 7 : on place la pièce ainsi obtenue, dans un moule que l'on chauffe et que l'on met sous pression.

## Claims

1. Method for manufacturing a stop element for an aircraft, comprising a metallic insert (4), by moulding a composite material of resin and carbon fibres, consisting of draping a stack of formed elements (10, 20, 30, 40, 50, 60) by means of superimposing carbon fibre bundles pre-impregnated with resin, the bundles being oriented in such a way as to ensure maximum cohesion of the assembly around the metallic insert (4), in which the stack of carbon fibre elements pre-impregnated with resin is provided with a metallic insert (4) intended to receive a stop screw (3) and according to which the following steps are carried out:
Step 1: An element (10) is formed flat by bundling a plurality of layers of carbon bundles (15) immersed in the resin, this element (10) comprising an assembly (11) of longitudinal bundles and bundles spreading laterally in four sections (13, 14, 15, 16) separated by a median part (12);
Step 2: The said median part (12) is rolled around a metallic insert (4) provided with two shoulders;
Step 3: The insert and the element (10) are installed in the moulding tool and the sections (13) and (14) are folded onto one another, and the sections (15) and (16) in the same manner, while reserving for later use the two sides (11) of the element (10);
Steps 4 and 5: Reinforcement elements (20) and a sole piece (30) are put in place and then, in order to encase these two elements, the two parts (11) reserved earlier are folded in;
Step 6: Finally, three sole pieces (40, 50, 60) are fitted in order to obtain the stop assembly formed in this way;
Step 7: The element thus obtained is placed in a mould which is then heated and placed under pressure.

## Patentansprüche

1. Verfahren zum Herstellen von Flugzeugsperren mit einem metallischen Einsatz (4) durch Formpressen eines Verbundmateriales aus Harz und Kunststoff-Fasern, wobei das Verfahren darin besteht, einen Stapel von ausgeführten Bauteilen (10, 20, 30, 40, 50, 60) durch eine Überschichtung mit von mit Harz vorimprägnierten Kohlenstoff-Faservliesen zu umhüllen, wobei die Vliese so orientiert sind, daß sie einen maximalen Zusammenhalt der Gesamtheit um den metallischen Einsatz (4) herum sicherstellen, wobei im Verfahren der Stapel der Bauteile aus mit Harz vorimprägnierten Kohlenstoff-Fasern einen metallischen Einsatz (4) aufnimmt, der zur Aufnahme einer Anschlagschraube (3) dient, und man gemäß dem Verfahren die folgenden Schritte ausführt:
Schritt 1: man bewirkt ein ebenes Auflegen mehrer Schichten von in Harz getränkten Kohlenstoff-Fasern (15), wobei ein Bauteil (10) eine Gesamtheit (11) von Längsfasern und von seitlich in vier Flügeln (13, 14, 15, 16) ablaufenden, durch einen Mittelabschnitt (12) getrennten Fasern umfaßt;
Schritt 2: man rollt den Mittelabschnitt (12) um einen metallischen Einsatz (4), der mit zwei Schultern versehen ist;
Schritt 3: man bringt den Einsatz wie auch das Bauteil (10) in dem Formwerkzeug an und legt die Flügel (13) und (14) ebenso wie die Flügel (15) und (16) jeweils übereinander um, wobei jedoch für eine spätere Verwendung die beiden Seiten (11) des Bauteiles (10) aufgehoben werden;
Schritte 4 und 5: man bringt Verstärkungsstücke (20) und eine Unterlegplatte (30) an, wonach man die beiden vorher aufgehobenen Bauteile (11) umbiegt, um diese beiden Stücke (20) zu umfassen;
Schritt 6: zur Beendigung werden drei Grundplatten (40, 50, 60) angebracht, um die Gesamtheit der gebildeten Sperre zu erhalten;
Schritt 7: man plaziert das so erhaltene Bauteil in einer Form, die man erwärmt und unter Druck setzt.
